# EUROPEAN PATENT APPLICATION

(11) **EP 4 797 182 A1**
(43) Date of publication of application: **26.08.2026**
(21) Application number: 25305242.7
(22) Date of filing: 24.02.2025
(51) Int. Cl.: G06Q 20/32

(54) **METHOD FOR EXPORTING PAYMENT TRANSACTION DATA FROM A SMART CARD**

(71) Applicant: THALES DIS FRANCE SAS, 92190 Meudon (FR)
(72) Inventor: SALLES, Jean-Luc, 13720 La Bouilladisse (FR); FAVREAU, Valentin, 92130 Issy les Moulineaux (FR); PALADJIAN, Pierre, 13190 Allauch (FR)
(74) Representative: Grevin, Emmanuel

(57) **Abstract**

The invention is a method implemented by an electronic apparatus (10) hosting a first application (11) able to perform payment transactions in conjunction with a terminal (20). The method comprises the steps of:
obtaining, by the first application, first transaction data (D1) reflecting processing of a first payment transaction;
retrieving by a hub application (18) hosted in the electronic apparatus, said first transaction data in a first format specific to the first application;
converting and storing, by the hub application, in a memory (19) of the electronic apparatus, said first transaction data in a unified format different from said first format; and
in response to receiving an export command (64) from a rendering device (15, 60), selecting, by the hub application, an export format based on the export command, then exporting a subset (40) of said first transaction data to the rendering device in said export format.

## Description

### (Field of the invention)

The present invention relates to methods for exporting payment transaction data from a smart card. It relates particularly to methods for exporting payment transaction data from a smart card hosting a plurality of payment applications.

### (Background of the invention)

A payment card may participate to a financial transaction for providing a connected terminal with data required to conduct the transaction. For example, the financial transaction may be a payment carried out via a Point-Of-Sale (POS) terminal or a cash withdrawal made with an automated teller machine (ATM).

A payment card can host one or more payment applications and the cardholder can select the desired payment application when planning to make a financial transaction. Typically, each payment application usually stores in the card memory a transaction log comprising data specific to each transaction which has been performed. Such transaction data may contain the date, the type of transaction, the amount and an indicator of the success or failure of the transaction for example.

### (Summary of the Invention)

Depending on the specifications they depend on, each payment application may use a storage format as well as data export methods that are different from other payment applications.

When a cardholder needs to access the multiple transaction logs stored in a payment card, they have to use each specific export methods and, to consult the retrieved data, they must use as many different software tools adapted to the format of each payment application.

There is a need to ease the way the cardholder can access the multiple transaction logs stored in a payment card.

The invention aims at solving the above-mentioned technical problem.

An object of the present invention is a processing method implemented by an electronic apparatus hosting a first application which is able to perform payment transactions in conjunction with a terminal coupled to the electronic apparatus. The method comprises:
- obtaining, by the first application, first transaction data reflecting processing of a first payment transaction;
- retrieving by a hub application hosted in the electronic apparatus, said first transaction data in a first format specific to the first application;
- converting and storing, by the hub application, in a memory of the electronic apparatus, said first transaction data in a unified format different from said first format; and
- in response to receiving an export command from a rendering device, selecting, by the hub application, an export format based on the export command, then exporting a subset of said first transaction data to the rendering device in said export format.

Advantageously, the electronic apparatus may host a set of payment applications able to perform payment transactions in conjunction with the terminal, the set comprising said first application and a second application, and the method may comprise the following steps:
- obtaining, by the second application, second transaction data reflecting processing of a second payment transaction;
- retrieving by the hub application the second transaction data in a second format specific to the second application;
- storing, by the hub application said second transaction data in the unified format which is different from said second format; and
- in response to receiving the export command from the rendering device, converting by the hub application a second subset of said first and second transaction data in said export format and exporting the second subset to the rendering device in said export format.

Advantageously, the electronic apparatus may comprise a communication interface designed to establish a communication channel between the terminal and the first application, and
the hub application may retrieve said first transaction data by intercepting the first transaction data exchanged through said communication channel.

Advantageously, the hub application may retrieve said first transaction data by directly querying the first application via a dedicated command.

Advantageously, the rendering device may be an electronic device coupled to the electronic apparatus through a contactless communication channel.

Advantageously, the rendering device may be a rendering application hosted in the electronic apparatus, the electronic apparatus may comprise a user interface and the rendering device may provide said subset to a user through the user interface.

Advantageously, the hub application may control a number of attempts to export data before exporting said subset to the rendering device.

Advantageously, the hub application may obtain said subset by filtering said first transaction data using a filter parameter specified by the rendering device.

Another object of the present invention is an electronic apparatus hosting a first application able to perform payment transactions in conjunction with a terminal coupled to the electronic apparatus. The first application is able to obtain first transaction data reflecting processing of a first payment transaction. The electronic apparatus comprises a hub application configured to:
- retrieve said first transaction data in a first format specific to the first application;
- convert and store in a memory of the electronic apparatus, said first transaction data in a unified format different from said first format; and
- in response to receiving an export command from a rendering device, to select an export format based on the export command, then to send a subset of said first transaction data in said export format to the rendering device.

Advantageously, the electronic apparatus may host a set of payment applications able to perform payment transactions in conjunction with the terminal. The set may comprise said first application and a second application which is able to obtain a second transaction data reflecting processing of a second payment transaction. The hub application may be configured to:
- retrieve the second transaction data in a second format specific to the second application;
- store said second transaction data in the unified format which is different from said second format; and
- in response to receiving the export command from the rendering device, to convert a second subset of said first and second transaction data in said export format and to export the second subset to the rendering device in said export format.

Advantageously, the electronic apparatus may comprise a communication interface designed to establish a communication channel between the terminal and the first application, the hub application may be configured to retrieve said first transaction data by intercepting the first transaction data exchanged through said communication channel.

Advantageously, the hub application may be configured to retrieve said first transaction data by directly querying the first application via a dedicated command.

Advantageously, the rendering device may be a rendering application hosted in the electronic apparatus, the electronic apparatus may comprise a user interface and the rendering device may be configured to provide said subset to the user through the user interface.

Advantageously, the hub application may be configured to obtain said subset by filtering said first transaction data using a filter parameter which is specified by the rendering device.

Another object of the present invention is a system comprising an electronic apparatus according to the invention and an electronic device coupled to the electronic apparatus through a contactless communication channel. The electronic device is said rendering device and said electronic device is a phone, a tablet PC, a laptop, a Personal digital assistant, or a smartwatch.

### (Brief description of the drawings)

Other characteristics and advantages of the present invention will emerge more clearly from a reading of the following description of a number of preferred embodiments of the invention with reference to the corresponding accompanying drawings in which:
- Fig. 1 shows an exemplary flow diagram for exporting transaction logs from an electronic apparatus according to an example of the invention,
- Fig. 2 shows a diagram of the overall architecture of an electronic apparatus according to an example of the invention,
- Fig. 3 shows a diagram of architecture detailing applications installed on an electronic apparatus according to an example of the invention, and
- Fig. 4 shows a diagram of the overall architecture of a system according to an example of the invention.

### (Detailed description of the preferred embodiments)

Smart cards are portable small devices comprising at least a memory, a hardware processor, and an operating system for computing treatments. They may comprise services applications like payment, access control, identity, or telecom applications. Smart cards may be considered as secure elements. They may comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic engines. In general, smartcards have limited computing resources and limited memory resources and they are intended to connect a host machine which may provide them with electric power either in contact mode or contactless mode.

The invention may apply to any type of electronic apparatus having physical limitations of smart cards and intended to participate to a financial transaction with a coupled terminal. For example, the electronic apparatus may be a payment smart card such as a credit card or a debit card, a connected wearable device like an e-watch, a payment ring, or a payment wristband.

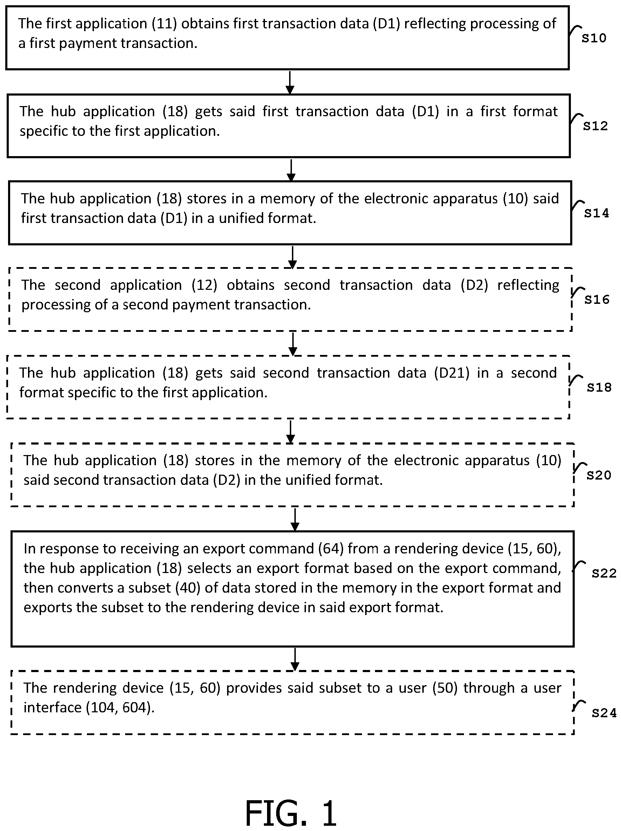

Figure 1 depicts an exemplary flow diagram for exporting transaction data from a payment card according to an example of the invention.

In this example, the electronic apparatus is a hardware payment card assigned to a cardholder.

The electronic apparatus hosts a first application which is designed to perform financial transactions in conjunction with a bank terminal coupled to the electronic apparatus. The bank terminal can be a POS terminal or ATM for instance.

When a first financial transaction is carried out, the first application obtains (step S10) first transaction data reflecting processing of a performed financial transaction. The first transaction data can comprise one or more parameters originated from the coupled bank terminal and one or more parameters originated from the electronic apparatus.

The first application can store the obtained transaction data in its own transaction log recorded in the non-volatile memory of the electronic apparatus.

The electronic apparatus hosts a hub application specifically designed for the invention.

The hub application retrieves (step S12) the first transaction data in a first format specific to the first application.

The hub application convers the transaction data in a unified format (also called storing format) then stores (step S14) in a storage area of the electronic apparatus the converted transaction data in the unified format.

It should be noted that the hub application is distinct from the first application and the unified format is different from the first format specific to the first application.

After the end of the first financial transaction, the cardholder may want to consult the transaction data stored in the electronic apparatus by the hub application. The cardholder may use a rendering device to trigger export of the transaction data.

In some embodiments, the rendering device may be a smartphone or any physical apparatus able to establish a communication channel with the electronic apparatus. On cardholder trigger, the rendering device sends an export command to the hub application through the established communication channel.

In response to receiving the export command, the hub application selects an export format based on the received export command, identifies a subset of the transaction log stored in the unified format, then converts the subset in the export format and exports (step S22) the subset to the rendering device in the export format.

Then, the rendering device may provide (step S24) the received subset of transaction data to the cardholder through a user interface (like a display screen, a speaker or an integrated video projector) of the rendering device.

In some embodiments, the rendering device may be a rendering application hosted in the electronic apparatus itself. The electronic apparatus may embed a user interface (like a display screen) and the rendering application may provide the cardholder with the selected subset of transaction data directly through the user interface of the electronic apparatus. Such embodiments allow the cardholder to access content of the transaction data stored in the electronic apparatus without requiring use of another physical device assuming the electronic apparatus is powered by an external or internal energy source.

The electronic apparatus comprises a physical communication interface which is designed to establish a communication channel between the bank terminal and the first application for carrying out the financial transaction. In some embodiments, the hub application can retrieve the transaction data by intercepting messages and data exchanged through the communication channel.

For instance, the hub application may be configured to spy the conventional "Select" command received from the reader side which aims at selecting the application (e.g. the first application) to be used for performing the transaction and to extract the identifier of the first application from the payload of the Select command.

In some embodiments, the hub application may retrieve the transaction data (of the current or most recent financial transaction) by directly querying the first application using a dedicated querying message or command. For instance, the first application may be configured to provide its identifier to the hub application in a previous step.

In some embodiments, the first application may automatically send the transaction data to the hub application using an information sharing message at the end of the current financial transaction.

In some embodiments, the hub application can be permanently active in the electronic apparatus. In some embodiments, the hub application can be temporary deactivated in the electronic apparatus according to proper configuration parameters.

In some embodiments, the electronic apparatus may host a second application which is designed to perform financial transactions in conjunction with a bank terminal coupled to the electronic apparatus.

As illustrated in Fig. 1, when a financial transaction involving the second application is carried out, the second application obtains (step S16) second transaction data reflecting processing of the performed financial transaction.

The second application may store the obtained second transaction data in its own transaction log recorded in the non-volatile memory of the electronic apparatus.

The hub application retrieves (S18) the second transaction data in a second format specific to the second application.

The hub application convers the second transaction data in the unified format, then stores (step S20) in the dedicated storage area of the electronic apparatus the retrieved second transaction data in the unified format.

It should be noted that the hub application is distinct from the second application and the unified format is different from the second format specific to the second application.

When the cardholder wants to consult the transaction data stored in the electronic apparatus by the hub application, the cardholder may trigger export of a subset of the targeted transaction data by using a rendering device as previously described.

In some embodiments, the electronic apparatus may host three or more payment applications and the hub application may store and export transaction data attached to any number payment applications.

In some embodiments, the hub application may control the number of attempt(s) to export data before exporting the targeted subset of transaction data to the rendering device. Thus, the hub application may deny an attempt to export transaction data if the necessary conditions are not met.

In some examples, the hub application may maintain an access counter (or register) which is incremented at each export request and authorize export of the subset only if the access counter is below a preset threshold.

In some examples, the transaction data may contain the transaction time and the hub application may authorize export of the transaction data only during a predefined period (like 5 minutes, 30 minutes, or 2 hours) after the time of the financial transaction. Such embodiments allow to increase privacy protection.

In some embodiments, the hub application may keep transaction data of a limited number of financial transactions. For instance, the hub application may erase the oldest transaction data from the storage area of the electronic apparatus when a predefined limit is reached. By keeping the transaction data of the n last transaction(s), the dedicated storage area can be sized to remain compatible with the size of the non-volatile memory of the electronic apparatus.

In some embodiments, the hub application may erase a specific transaction data from the storage area of the electronic apparatus payment as soon as it has exported the specific transaction data.

In some embodiments, the hub application may obtain the desired subset of transaction data by filtering transaction data stored in the unified format using one or more filter parameters specified by the rendering device. For instance, filter parameters may be conveyed in the export command received by the hub application. For example, a filter parameter could specify a specific payment application so that the hub application export only transaction data originated from financial transactions involving the specific payment application. In another example, a filter parameter 65 could specify be that transaction data of the last executed financial transaction.

In another example, a filter parameter 65 could specify the type of financial transaction for which transaction data is desired.

It should be noted that the filter parameter can be specified implicitly by the rendering device. For instance, when receiving an export command devoid of filter parameter, the hub application can infer from this that the rendering device needs transaction data of the last executed financial transaction.

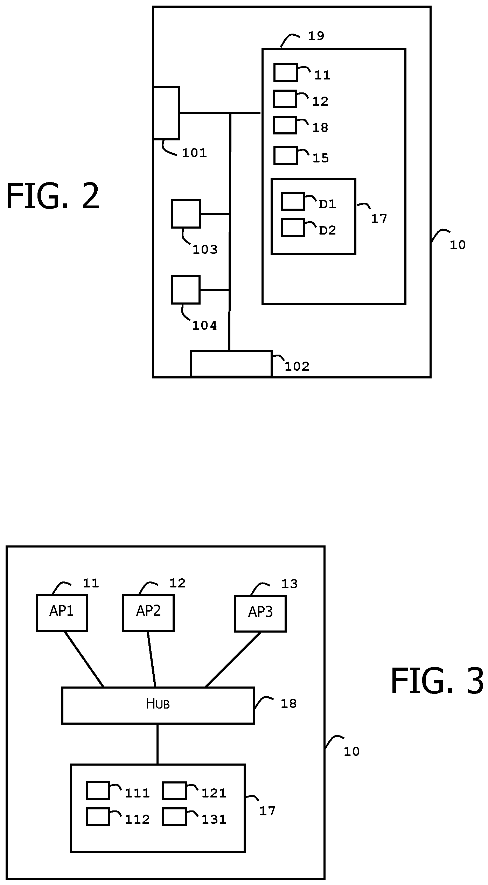

Figure 2 depicts a diagram of the overall architecture of an electronic apparatus according to an example of the invention.

In this example, the electronic apparatus 10 is a payment chip card.

The electronic apparatus 10 comprises a non-volatile memory 19, a hardware processor 103, a first communication interface 101 able to establish a communication channel with a bank terminal and a second communication interface 102 able to establish a communication channel with an external rendering device like a smartphone.

The first communication interface 101 can be designed to communicate in contact mode (using T=0 protocol defined by ISO/IEC7816 standard for instance) or in contactless mode (using communication protocol defined by ISO/IEC1443 standard for instance).

The electronic apparatus 10 hosts two payment applications 11 & 12 able to perform payment transactions in conjunction with a bank terminal coupled to the electronic apparatus through the first communication interface 101. Each of said payment applications is able to obtain transaction data reflecting processing of the financial transaction in which it participates.

The electronic apparatus 10 hosts a hub application 18 which is designed to retrieve transaction data obtained by any of the payment applications 11 & 12 in a format specific to the involved payment application.

The hub application 18 is designed to convert the retrieved transaction data in a unified format and to store the converted transaction data in the unified format in a dedicated storage area 17 of the memory 19.

In the example of Fig. 1, the hub application 18 has stored two transaction data D1 & D2 in the storage area 17. Preferably, the operating system of the electronic apparatus allows access to the dedicated storage area 17 only to the hub application 18.

The hub application 18 is designed to receive an export command from a rendering device which can be an external appliance, or an internal application 15 hosted in the electronic apparatus 10. In response to receiving the export command, the hub application 18 is designed to select an export format based on the export command, then to convert in the export format a subset of the transaction data stored in dedicated storage area 17 and to export this subset to the rendering device in the export format.

In some embodiments, the format specific to the involved payment application could be a Tag Length Value (TLV) format, a Data Object List (DOL) format or other proprietary format.

In some embodiments, the unified format and the export format could be based on a tag-length-value (TLV) structure, or an intermediate language adapted to record the value and possibly a description of the transaction data.

In some embodiments, the unified format and the export format could be based on record containing the concatenation of the received transaction data corresponding to a financial transaction.

The unified format can be configured to fit with a file system, or a database stored in the dedicated storage area 17.

It should be noted that the unified format and the export format could be the same or different.

In the example of Fig. 1, the electronic apparatus 10 comprises both a user interface 104 and a rendering device 15 which is a rendering application configured to get the subset from the hub application 18 and to provide the subset to a user (e.g. cardholder) through the user interface 104. The user interface 104 may be a display screen or a speaker for instance.

In some embodiments, the hub application can be designed to intercept transaction data exchanged between the payment applications and the coupled terminal. For performing a financial transaction, a communication channel is established through the communication interface 101 between the coupled bank terminal and one of first payment application 11 or 12. The hub application 18 can be configured to retrieve the transaction data by intercepting the messages or data packets exchanged through the communication channel.

Preferably, the hub application 18 is configured to spy the exchanged at a point where exchanged data/messages are in clear (e.g. outgoing data still not enciphered and incoming data already deciphered) through the communication channel.

Thus, all spied data can be in clear without need to perform a deciphering process.

Two different types of spying may be managed:
One for the data coming from the coupled terminal (e.g. incoming Command), and
One for the data coming from the first application (and the card) (e.g. outgoing response).

In both cases, data frames are decoded and by configuration, the needed information are selected and saved.

In some embodiments, the hub application 18 can be configured to retrieve the transaction data by directly querying the payment application involved in the financial transaction. For example, the hub application 18 may send dedicated command to query the proper transaction data.

The hub application 18 may be configured to retrieve the transaction data during (or just after) the financial transaction.

In some embodiments, when the Hub Application receives the request to make transaction data available, it queries the various payment applications installed on the card to retrieve the relevant transaction data. Payment application may have been registered with the hub application during a prior personalization phase.

The hub application 18 may be configured to retrieve the transaction data after receiving an export command from a rendering device. In such a case, the hub application 18 may query every payment application installed in the electronic apparatus to populate the dedicated storage area 17.

Figure 3 depicts a diagram of architecture detailing applications installed on an electronic apparatus 10 according to an example of the invention.

In this example, the electronic apparatus 10 is a credit card comprising the hub application 18.

The electronic apparatus 10 comprises three payments applications 11, 12 and 13.

The electronic apparatus comprises a storage area 17 storing a set of four transaction data: first transaction data 111 reflecting a first financial transaction carried out with the first payment application 11, second transaction data 112 reflecting a second financial transaction carried out with the first payment application 11, third transaction data 121 reflecting a third financial transaction carried out with the second payment application 12, and fourth transaction data 131 reflecting a fourth financial transaction carried out with the third payment application 13.

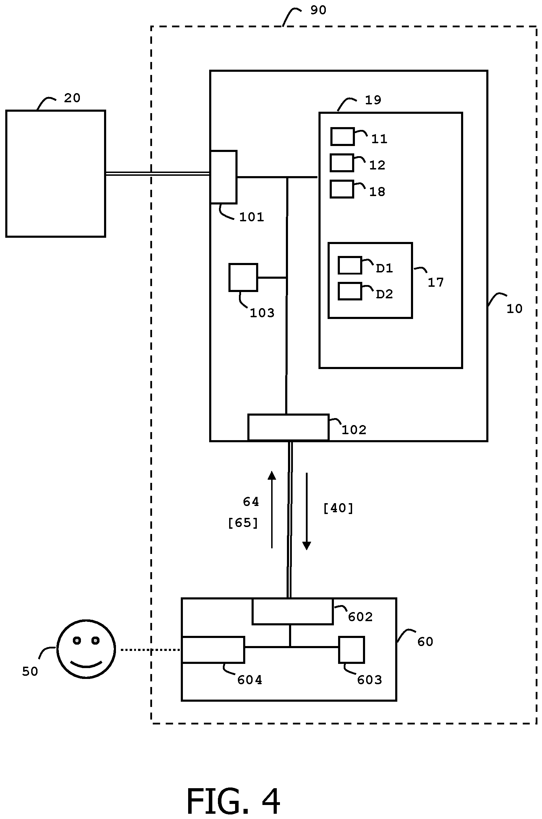

Figure 4 depicts a diagram of the overall architecture of a system 90 according to an example of the invention.

The system 90 comprises an electronic apparatus 10 according to the invention and an electronic device 60 which is communicably coupled to the electronic apparatus through a contactless communication channel.

In the example of Fig. 4, the electronic apparatus 10 is similar to that of Fig. 2 with the following differences: the electronic apparatus 10 is devoid of both a rendering application 15 and a user interface 104.

The electronic apparatus 10 comprises a communication interface 101 able to communicate with a bank terminal 20 for carrying out conventional financial transactions like a payment transaction or a cash withdrawal.

The electronic device 60 can act as a rendering device for providing the user 50 (e.g. cardholder) with transaction data retrieved from the electronic apparatus 10.

The electronic device 60 may be a smartphone, a tablet PC, a laptop, a Personal digital assistant, or a smartwatch for instance.

The electronic device 60 embeds one or more hardware processors 603 and one or more memories comprising program instructions designed to provide the functions of the electronic device 60 required by the different embodiments of the invention when executed by the hardware processor(s) 603.

The electronic device 60 comprises a user interface 604 which may be a display screen or a speaker for instance.

The electronic device 60 comprises a communication interface 602 able to establish a contactless communication channel with the communication interface 102 of the electronic apparatus 10. The contactless communication channel may be compliant with NFC specifications.

In a preferred embodiment, the export format can be the NFC Data Exchange Format (NDEF) format. Thus, the subset 40 (exported from the electronic apparatus 10) can be conveyed in data packet formatted according to NDEF format through the contactless communication channel.

In some embodiments, the contactless communication channel established between the electronic apparatus 10 and the electronic device 60 can rely on BLE^{®} (Bluetooth Low Energy) specifications.

An advantage of some embodiments of the invention, is to simplify the consultation of transaction data from a plurality of payment applications by providing a single entry point for the cardholder (or the user's rendering device). The user no longer needs to identify the right payment application (among multiple applications) and address it specifically to get the desired transaction data.

Thanks to some embodiments of the invention, the user experience is the same regardless of the origin of the transaction data the user wants to read, check, or control.

An advantage of some embodiments of the invention, is to make data export independent of the particular format of each payment application embedded in the electronic device.

## Claims

1. A processing method implemented by an electronic apparatus (10) hosting a first application (11) able to perform payment transactions in conjunction with a terminal (20) coupled to the electronic apparatus, said method comprising:
obtaining (S10), by the first application, first transaction data (D1) reflecting processing of a first payment transaction;
wherein the method comprises:
retrieving (S12) by a hub application (18) hosted in the electronic apparatus, said first transaction data (D1) in a first format specific to the first application;
converting and storing (S14), by the hub application (18), in a memory (19) of the electronic apparatus, said first transaction data (D1) in a unified format different from said first format; and
in response to receiving an export command (64) from a rendering device (15, 60), selecting, by the hub application (18), an export format based on the export command, then exporting (S22) a subset (40) of said first transaction data to the rendering device in said export format.

2. The method according to claim 1, wherein the electronic apparatus (10) hosts a set of payment applications able to perform payment transactions in conjunction with the terminal (20), the set comprising said first application (11) and a second application (12),
wherein the method comprises:
obtaining (S16), by the second application, second transaction data (D2) reflecting processing of a second payment transaction;
retrieving (S18) by the hub application (18) the second transaction data (D2) in a second format specific to the second application;
storing (S20), by the hub application said second transaction data in the unified format which is different from said second format; and
in response to receiving the export command (64) from the rendering device (15, 60), converting by the hub application (18) a second subset of said first and second transaction data in said export format and exporting the second subset to the rendering device in said export format.

3. The method according to any of the preceding claims, wherein the electronic apparatus (10) comprises a communication interface (101) designed to establish a communication channel between the terminal (20) and the first application, and
wherein the hub application (18) retrieves said first transaction data (D1) by intercepting the first transaction data exchanged through said communication channel.

4. The method according to claim 1 or 2,
wherein the hub application (18) retrieves said first transaction data (D1) by directly querying the first application via a dedicated command.

5. The method according to any of the preceding claims, wherein the rendering device (60) is an electronic device coupled to the electronic apparatus (10) through a contactless communication channel.

6. The method according to any of the preceding claims, wherein the rendering device (15) is a rendering application hosted in the electronic apparatus (10), wherein the electronic apparatus comprises a user interface (104) and wherein the rendering device provides said subset to a user (50) through the user interface.

7. The method according to any of the preceding claims, wherein the hub application (18) controls a number of attempts to export data before exporting said subset to the rendering device.

8. The method according to any of the preceding claims, wherein the hub application (18) obtains said subset by filtering said first transaction data using a filter parameter (65) specified by the rendering device.

9. An electronic apparatus (10) hosting a first application (11) able to perform payment transactions in conjunction with a terminal (20) coupled to the electronic apparatus, said first application being able to obtain first transaction data (D1) reflecting processing of a first payment transaction;
wherein the electronic apparatus comprises a hub application (18) configured to:
retrieve said first transaction data (D1) in a first format specific to the first application;
convert and store in a memory (19) of the electronic apparatus, said first transaction data (D1) in a unified format different from said first format; and
in response to receiving an export command (64) from a rendering device (15, 60), to select an export format based on the export command, then send a subset (40) of said first transaction data in said export format to the rendering device.

10. The electronic apparatus according to claim 9, wherein the electronic apparatus hosts a set of payment applications able to perform payment transactions in conjunction with the terminal (20), the set comprising said first application (11) and a second application (12) which is able to obtain a second transaction data (D2) reflecting processing of a second payment transaction,
wherein the hub application (18) is configured to:
retrieve the second transaction data (D2) in a second format specific to the second application;
store said second transaction data in the unified format which is different from said second format; and
in response to receiving the export command (64) from the rendering device (15, 60), to convert a second subset of said first and second transaction data in said export format and to export the second subset to the rendering device in said export format.

11. The electronic apparatus according to any of the claim 9 to 10, wherein the electronic apparatus (10) comprises a communication interface (101) designed to establish a communication channel between the terminal (20) and the first application, and
wherein the hub application (18) is configured to retrieve said first transaction data (D1) by intercepting the first transaction data (D1) exchanged through said communication channel.

12. The electronic apparatus according to claim 9 or 10, wherein the hub application (18) is configured to retrieve said first transaction data (D1) by directly querying the first application via a dedicated command.

13. The electronic apparatus according to any of the claim 9 to 12, wherein the rendering device (15) is a rendering application hosted in the electronic apparatus (10), wherein the electronic apparatus comprises a user interface (104) and wherein the rendering device is configured to provide said subset to a user (50) through the user interface.

14. The electronic apparatus according to any of the claim 9 to 13, wherein the hub application (18) is configured to obtain said subset by filtering said first transaction data using a filter parameter (65) specified by the rendering device.

15. A system (90) comprising an electronic apparatus (10) according to claim 9 and an electronic device (60) coupled to the electronic apparatus through a contactless communication channel, wherein the electronic device is said rendering device and wherein said electronic device is a phone, a tablet PC, a laptop, a Personal digital assistant, or a smartwatch.
